# EUROPEAN PATENT SPECIFICATION

(11) **EP 3 617 169 B1**
(45) Date of publication and mention of the grant of the patent: **06.09.2023**
(21) Application number: 18790374.5
(22) Date of filing: 25.04.2018
(51) Int. Cl.: C03C 27/06

(54) **INSULATING GLASS AND METHOD OF MANUFACTURING SAME, AND SEALING MATERIAL FOR INSULATING GLASS**
ISOLIERGLAS UND VERFAHREN ZU SEINER HERSTELLUNG UND DICHTUNGSMATERIAL FÜR ISOLIERGLAS
VERRE ISOLANT ET SON PROCEDE DE FABRICATION, ET MATÉRIAU D'ÉTANCHÉITÉ POUR VERRE ISOLANT

(30) Priority: 28.04.2017 JP 2017090609
(43) Date of publication of application: 04.03.2020
(60) Divisional application: 23187016.3
(73) Proprietor: AGC Inc., Chiyoda-ku Tokyo 100-8405 (JP)
(72) Inventor: SHIBUYA, Takashi, Tokyo 100-8405 (JP); FUJII, Yuri, Tokyo 100-8405 (JP); YAGI, Mao, Yokohama-shi Kanagawa 221-8755 (JP)
(74) Representative: Müller-Boré & Partner Patentanwälte PartG mbB
(86) International application number: PCT/JP2018/016848
(87) International publication number: WO 2018/199177

(56) References cited:
- WO-A1-2014/162481
- JP-A- S5 369 210
- JP-A- H10 114 551
- US-A- 623 536

## Description

### TECHNICAL FIELD

The present invention relates to an insulating glass and a method of manufacturing an insulating glass, and a sealing material for insulating glass.

### BACKGROUND ART

Conventionally, in insulating glass including two or more sheets of glass that are spaced apart via only a spacer so that an air space layer is formed therebetween, insulating glass is known in which the spacer is made from a thermoplastic resin composition having a JIS A hardness of 10 to 90 at 25 °C, and the thermoplastic resin composition contains a butyl-type rubber, a crystalline polyolefin, a desiccant, and an inorganic filler, wherein a percentage of the butyl-type rubber with respect to the total amount of the butyl-type rubber and the crystalline polyolefin is 50 to 98% by weight, the percentage of crystalline polyolefin is 2 to 50% by weight, and the percentage of inorganic filler with respect to the total amount of the butyl-type rubber and the crystalline polyolefin is 200 or less (See, for example, Patent Document 1).

According to the insulating glass, by using the thermoplastic resin composition having the JIS A hardness of 10 to 90 at 25 °C as the spacer, the complication of the manufacturing process when the metal spacer is used can be solved, and the problem of a long time curing necessary to use a room temperature curable sealant can be solved, thereby improving the productivity.

### PRIOR ART DOCUMENTS

### PATENT DOCUMENTS

Patent Document 1: Japanese Unexamined Patent Application Publication No. H10-11455. US 6 235 356 B1 describes a resin composition for building materials and insulating glass.

### SUMMARY OF THE INVENTION

### PROBLEM TO BE SOLVED BY THE INVENTION

However, when manufacturing the insulating glass disclosed in Patent Document 1, if the spacer material is arbitrarily selected, the viscosity of the spacer material may increase during melt molding of the spacer. In such a case, heating the spacer material at a significantly higher temperature was required to melt and mold the spacer material. In addition, because it is necessary to increase the heating temperature of the spacer material, there have been problems of increasing energy required in the manufacturing process while decreasing the energy efficiency, and increasing the manufacturing cost. Furthermore, heating the spacer material to a high temperature may promote deterioration of the spacer material, and thus it is not necessarily preferable from the viewpoint of long-term reliability.

Accordingly, the present invention is intended to provide insulating glass and a method of manufacturing insulating glass and a sealing material for insulating glass that can reduce energy consumption during manufacture, reduce deterioration of the sealing material, and increase long-term reliability by using a sealing material to be molded at a low temperature.

### MEANS FOR SOLVING THE PROBLEM

In order to achieve the above-described object, insulating glass according to the subject-matter of claim 1.

### ADVANTAGEOUS EFFECT OF THE INVENTION

According to the present invention, long-term reliability of insulating glass can be improved.

### BRIEF DESCRIPTION OF THE DRAWINGS

FIG. 1 is a partial schematic cross-sectional view illustrating an example of a structure of insulating glass according to a first embodiment of the present invention;
FIG. 2 is a diagram showing an example of insulating glass according to a second embodiment of the present invention;
FIG. 3 is a diagram illustrating an example of a glass sheet arrangement process of a manufacturing method of insulating glass;
FIG. 4 shows an example of an extruder;
FIG. 5 is a schematic cross-sectional view illustrating a method of measuring creep compliance J;
FIG. 6 is a table showing compositions of Examples 1 to 7 and Comparative Examples 1 to 3;
FIG. 7 is a diagram of an overall composition shown in FIG. 6 converted into a ratio of a butyl-type rubber to a crystalline polyolefin;
FIG. 8 is a diagram showing a percentage of an inorganic filler with respect to total 100 parts by weight of a butyl-type rubber and a crystalline polyolefin in a total composition shown in FIG. 6 by converting to parts by weight;
FIG. 9 is a table showing evaluation results of Examples 1 to 7 and Comparative Examples 1 to 3; and
FIG. 10 is a diagram showing evaluation results of melt viscosity and storage elastic modulus of Examples 1 to 7 and Comparative Examples 1 to 3.

### EMBODIMENTS FOR CARRYING OUT THE INVENTION

Hereinafter, embodiments for carrying out the present invention will be described with reference to the drawings.

### [First Embodiment]

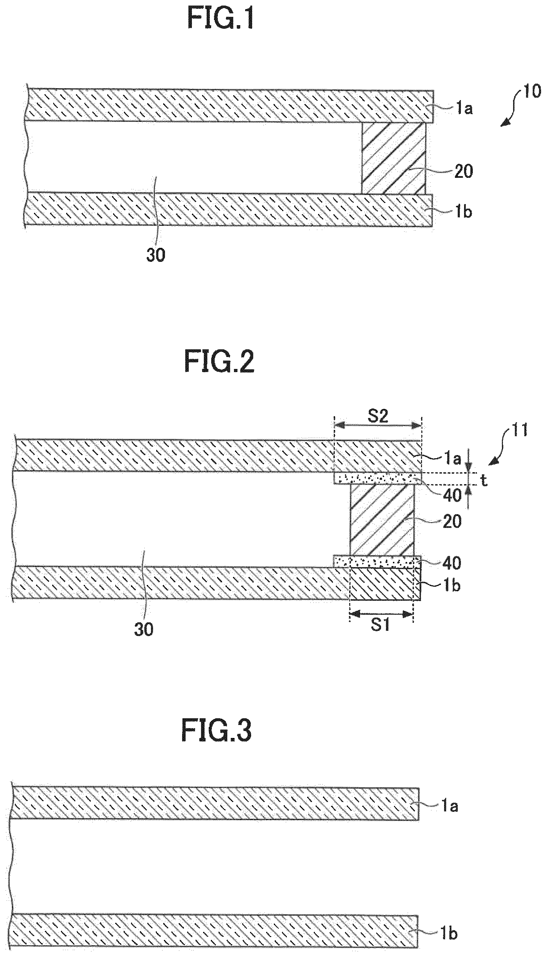

FIG. 1 is a partial schematic cross-sectional view illustrating an example of a structure of insulating glass according to a first embodiment of the present invention. As shown in FIG. 1, insulating glass 10 is held at a predetermined distance by only a spacer 20 such that two glass sheets 1a and 1b form an air space layer 30 therebetween. The spacer 20 is formed of a thermoplastic resin composition having a JIS A hardness of 10 to 90 and melt viscosity of 0.6 kPa·s or more and 7.0 kPa·s or less at 120 °C. The term "by only a spacer 20" used above means that a secondary sealant, a metal spacer and the like are not required, and that a primer process that is applied as necessary is included.

The melt viscosity is the viscosity at 120 °C and at a shear rate of 100/s measured according to the method specified in JIS K 7199 (1999) using a capillary having a capillary length of 10 mm and a capillary diameter of 2 mm, and a capillary rheometer having a furnace with a furnace body diameter of 9.55 mm.

The thermoplastic resin composition used for the spacer material in the configuration of the insulating glass according to the first embodiment of the present invention is a thermoplastic resin composition having JIS A hardness of 10 to 90 at 25 °C. Any of the thermoplastic resin compositions may be used as long as the resin composition has the above-described properties and the melt viscosity at 120 °C is not less than 0.6 kPa·s and not more than 7.0 kPa·s.

In FIG. 1, the insulating glass 10 includes the spacer 20 between two opposing glass sheets 1a and 1b, but the spacer 20 is formed by a molten molding process such as an extrusion molding process or an injection molding process. When such extrusion or injection molding is performed, the molten thermoplastic composition is extruded or ejected from an extruder, which is an applicator or an injection molding machine. However, if the viscosity of the thermoplastic resin composition is high, which is a spacer material, the spacer material cannot be melted and molded, and it is difficult to extrude and eject the spacer material from the molding machine, unless the temperature is raised to 180 °C or higher. When molding at such a high temperature of 180 °C or higher, a butyl-type rubber is close to the decomposition temperature. Therefore, when the butyl-type rubber is placed in a high temperature condition for a long time due to a problem in molding, the decomposition of the butyl-type rubber develops, and physical strength deterioration or gas barrier deterioration occurs.

On the other hand, if the temperature is 150 °C or less, the temperature does not reach the decomposition temperature of the butyl-type rubber. Therefore, the thermal decomposition is hardly concerned; the physical strength of the butyl-type rubber after being formed is maintained; and the gas barrier properties do not decrease. The inventors have found that the thermoplastic composition used in the spacer material can be molded at a temperature of 150 °C or lower, when the melt viscosity is set within a range of 0.6 kPa·s to 7.0 kPa·s at a temperature of 120 °C. As a result, the discharge amount of the spacer material is increased; high-speed molding is possible; and the manufacturing tact time is shortened. A cost reduction is also possible from the viewpoint of energy reduction during manufacture. Further, because the spacer material can be molded without being heated, degradation during molding of the spacer material itself can be reduced and long-term reliability can be improved. It should be noted that the temperature of the thermoplastic resin composition may be set to any degrees Celsius if it is 150 °C or lower, but may be set to a predetermined temperature, for example, within the range of 110 to 150 °C. Specifically, the temperature may be set to, for example, 120 to 130 °C.

The lower the melt viscosity becomes, the less workload the molding machine has, but if the melt viscosity is too low, it is difficult to form a certain shape due to the low viscosity. Therefore, from the viewpoint that the spacer material has moldable viscosity and the workload of the molding machine is small, the melt viscosity is set in the above-described range of 0.6 kPa·s to 7.0 kPa·s. The melt viscosity is preferably 1.0 kPa·s or more and 5.0 kPa·s or less, and more preferably 1.0 kPa·s or more and 4.5 kPa·s or less.

Also, the insulating glass 10 is actually used only after the molded spacer 20 is cooled and solidified and completed as the insulating glass 10, and the used temperature is typically set at room temperature of about 25 °C. On this occasion, if the elastic modulus of the spacer 20 at room temperature is too low, a shift between the glass sheets 1a and 1b (hereinafter, referred to as plate slippage) is likely to occur, and a shape retention problem is likely to occur. Further, if the elastic modulus of the spacer 20 at room temperature is too high, because stress relaxation due to deformation of the sealing material cannot be achieved in response to the deformation of the air space layer due to a change in temperature, the glass sheets 1a and 1b easily crack. Accordingly, the spacer 20 preferably has a suitable elastic modulus at room temperature. Therefore, the thermoplastic resin composition used as the spacer material of the insulating glass 10 in accordance with the present embodiment has a storage elastic modulus E' of 15 MPa or more and 60 MPa or less at 25 °C. Thus, it is possible to form a spacer 20 unlikely to cause a shift of the glass sheets 1a and 1b, and unlikely to be damaged itself. The storage elastic modulus E' at 25 °C is preferably 10 MPa or more and 45 MPa or less, more preferably 13 MPa or more and 40 MPa or less, more preferably 15 MPa or more and 30 MPa or less, and particularly preferably 20 MPa or more and 25 MPa or less.

Here, the storage elastic modulus E' is a component of energy that is stored inside an object with respect to the energy generated by external force and deformation, and represents elasticity (spring) rather than viscosity. Therefore, the higher the storage modulus E' is, the higher the elasticity is. The storage elastic modulus E' is a value of the storage elastic modulus at a temperature of 25 °C calculated from the results of a tensile test in which the temperature is raised at 5 °C/min in a constant-speed temperature rising mode; for a sample with length between grips of 20 mm; the width of 5 mm; and the thickness of 0.6 mm; where the strain is 0.1%; the static/dynamic ratio is 2; and the frequency is 1 Hz. By using a thermoplastic resin composition having the storage elastic modulus E' of 15 MPa or more and 60 MPa or less at 25 °C, the elasticity of the spacer 20 at room temperature can be appropriately maintained, and thus it is possible to form insulating glass 10 unlikely to damage the spacer 20 and unlikely to cause a shift between the glass sheets 1a and 1b.

Next, various examples of specific thermoplastic resin compositions that can be used for the insulating glass 10 according to the present embodiment will be described below.

For example, thermoplastic elastomers used in many applications in recent years and rubber-based materials in which the vulcanization density is adjusted to be able to melt and flow by heating, are included in the "thermoplastic resin composition" of the present invention as long as they have the above-described properties. Furthermore, the thermoplastic resin compositions including so-called plasticizers such as dibutylphthalate and di-2-ethylhexylphthalate are also included in the "thermoplastic resin compositions" of the present invention as long as they have the above-described properties.

Specifically, the resin composition used in the present invention preferably contains at least one of thermoformable rubber, elastomer and thermoplastic resin other than the rubber or elastomer described above, more preferably containing both. The resin composition is preferably made from a low moisture permeable rubber, an elastomer, or a thermoplastic. Further, a resin composition preferably incorporates a predetermined amount of desiccant in order to prevent moisture from entering the air space layer of the insulating glass when the insulating glass is formed.

The low moisture permeable and thermoformable rubber or elastomer includes a rubber or elastomer preferably having the moisture vapor permeable coefficient of 3000×10⁻¹³ cm³·cm/cm²·sec·Pa or less, and a butyl-type rubber, such as a copolymer mainly comprised of isobutylene and isoprene, a polyisobutylene, a butyl-type rubber, such as a polyisobutylene or a butyl halide rubber, is preferable. These low moisture permeable and thermoformable rubbers or elastomers may be used alone or used in two or more blends.

The low moisture permeable and thermoplastic resin other than the rubber or elastomer described above includes, for example, polyethylene, polypropylene, vinylidene chloride, polyvinyl chloride and the like, a copolymer of a monomer containing these polymers, or a modified form thereof, and a crystalline polyolefin is preferred, and particularly polyethylene is preferred. The water vapor permeable coefficient of these thermoplastic resins is preferably 3000×10⁻¹³ cm³·cm/cm² sec·Pa or less, and further preferably 500×10⁻¹³·cm³cm/cm²·sec·Pa or less. The thermoplastic particularly contributes to the shaperetaining performance of the spacer.

A desiccant is added, or further an inorganic filler or another additive is added as necessary, to the resin composition for the spacer according to the first embodiment of the present invention in addition to the low moisture permeable and thermoformable rubber or elastomer described above, or another low moisture permeable and thermoformable rubber or elastomer other than the rubber or elastomer described above. As a desiccant, any desiccant used in admixture with a conventional insulating glass's spacer or sealant may be used such as zeolite, alumina and silica gel.

Such a resin composition for a spacer preferably contains the above ingredients and may contain tackifiers, lubricants, pigments, antistatic agents, antiaging agents, thermal stabilizers, fillers, blowing agents and the like as additives as necessary.

The resin composition for the spacer is adjusted by kneading the ingredients. In adjusting the resin composition, it is important to combine the necessary ingredients so that the hardness of JIS A at 25 °C or less becomes 90 or less. The reasons for setting the hardness to 90 or less are as follows.

When a thermoplastic resin composition having a hardness of JIS A over 90 is used as a spacer for insulating glass, because creep hardly occurs, if the endurance test shown in JIS R 3209 is performed, the stress caused by the expansion of air is applied to the adhesion interface of the glass sheet and the spacer at a high temperature. For this reason, if the adhesion is insufficient, peeling occurs, and even if the adhesion is secured, the glass may break. Although it is possible to obtain adhesive strength sufficient to withstand the expansive stress of the air space layer by applying high temperatures or high pressures to the adhesive currently known, it does not suit to the present invention's objective of reducing manufacturing costs because high temperatures and high pressures cause breakage of the glass and greatly decrease productivity.

On the other hand, if the hardness is too low, problems arise in shape retention properties of the insulating glass. Therefore, it is important to add the required ingredients to the resin composition so that the hardness of JIS A at 25 °C or higher of the resin composition becomes 10 or higher. Furthermore, when the hardness of JIS A is 10 or more but the hardness is relatively small, the thickness of the air space layer may cause a sheet shift.

Commonly used insulating glass has an air space layer thickness of about 4 to 18 mm (often 6 mm or 12 mm). Accordingly, when the hardness is relatively small, a sheet shift may not occur when the thickness of the air space layer is 6 mm, but when the thickness is 12 mm, the sheet shift may occur. By increasing the hardness to 40 or more, it is possible to prevent the sheet from shifting even if the thickness of the air space layer is 12 mm. Therefore, it is particularly preferable that the JIS A hardness of the thermoplastic spacer be 40 or more in the insulating glass according to the present invention.

An insulating glass, which uses a resin composition with JIS A hardness over 90 as a spacer, causes great stresses on a glass sheet. Therefore, during the accelerated durability test, glass cracks occur in both insulating glass panes with a thickness of 5 mm and a thickness of 3 mm as specified in JIS R 3209.

In contrast, the insulating glass using the resin composition with JIS A hardness of 90 as a spacer does not crack the glass sheet in the insulating glass using the glass sheet with a thickness of 5 mm in the above test. In the meantime, insulating glass using 3 mm thick glass sheets may cause a glass crack in the above test. Therefore, the upper limit of the JIS A hardness of the resin composition for the spacer is 90. Moreover, in the above test, the insulating glass using the resin composition with JIS A hardness of 75 as a spacer does not crack the glass in any of the insulating glass using the glass sheets with a thickness of 5 mm and a thickness of 3 mm. The JIS A hardness of the resin composition for the spacer is preferably in a range of 40 to 75, because the glass sheet for insulating glass, which is currently commonly used, is 3 mm thick.

Whereas the stipulation of JIS A hardness is instantaneous, creep compliance J, which indicates creep characteristics, shows the properties of the resin when continuous stress is applied, and is expressed as the inverse of the elastic modulus. The creep compliance J is measured as follows, for example.

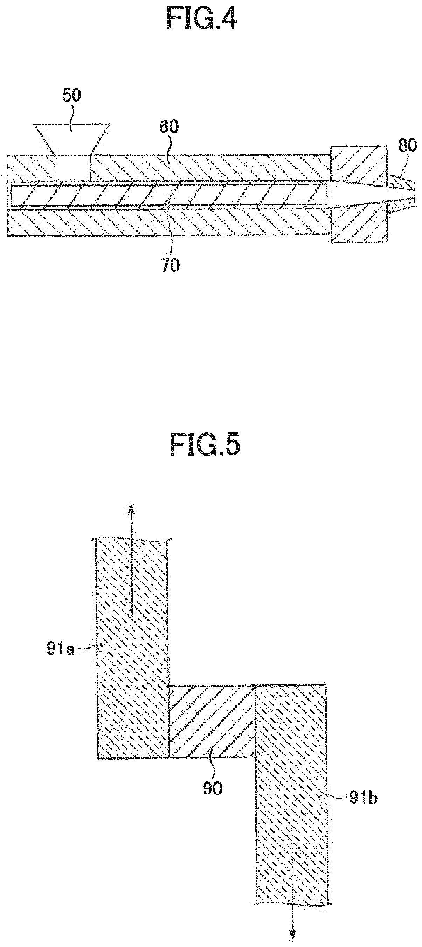

FIG. 5 is a schematic cross-sectional view showing a method of measuring creep compliance J. The resin material 90 to be measured is shaped to have a thickness of 12 mm with a 10×50 (mm) surface size to be adhered to the glass sheets 91a and 91b. Then, the glass sheet is pulled in the direction of the arrow shown in the figure at an atmospheric temperature of 40 °C so that a stress of 0.2 kg/cm² is always applied to the resin material, and the creep compliance J is calculated from the elongated length of material after 5 minutes. The value of J does not depend on the thickness of the glass sheets 91a and 91b. Here, a glass sheet having a thickness of 5 mm is used.

For example, the insulating glass is adsorbed by a suction disk and the like on one side of the insulating glass and loaded onto a pallet during transport after fabrication. Conversely, when the insulating glass is removed from the pallet, it is similarly adsorbed. The so-called "Hold on one side only" state of the insulating sucker is usually considered to be 5 minutes or less. The outdoor temperature in summer rises to about 40 °C. Therefore, it is preferable that the creep compliance J be 1×10⁻⁵ cm²/dyne or less [40 °C, shear mode, and 5 minutes after the start of measurement] in order not to cause a sheet shift during use.

In addition, when the creep compliance J is less than 1×10⁻¹⁰ cm²/dyne at [40 °C, shear mode, and 5 minutes after the start of measurement], the stress applied between the glass sheet and the spacer increases while causing problems such as peeling and glass cracking. Therefore, it is preferable that J at [40 °C, shear mode, 5 minutes after starting measurement] be 1×10⁻¹⁰ cm²/dyne or more.

As described above, the thickness of the air space layer of the insulating glass is often about 4 to 18 mm. Therefore, when the creep compliance J is relatively large even if the creep compliance J is 1×10⁻⁵ cm²/dyne or less at [40 °C, shear mode, and 5 minutes after the start of measurement], the thickness of the air space layer may cause a sheet shift. For example, when the creep compliance J is large, the sheet shift may occur when the air space layer has a thickness of 6 mm, even if the sheet shift does not occur when the air space layer has a thickness of 12 mm. Therefore, by setting the creep compliance J to 1×10⁻⁶ cm²/dyne or less, even if the thickness of the air space layer is 12 mm, the sheet shift can be prevented.

In addition, it is particularly preferable that the lower limit of creep compliance J be 1×10⁻⁹ cm²/dyne. At a value of 1×10⁻¹⁰ cm²/dyne, for example, in the endurance test specified in JIS R 3209, even if an insulating glass sheet with a thickness of 5 mm is not cracked, an insulating glass sheet with a thickness of 3 mm may be cracked. Therefore, it is particularly preferable that the lower limit of creep compliance J is 1×10⁻⁹ cm²/dyne at [40 °C, shear mode, and 5 minutes after the start of measurement] so as not to cause a crack of the glass sheet in the glass sheet of various thicknesses.

Taken together with the above, it is particularly preferable that the resin composition used for the spacer according to the present invention has a JIS A hardness of 40 to 75 and a creep compliance J of 1×10⁻⁶ to 1×10⁻⁹ cm²/dyne at [40 °C, shear mode, and 5 minutes after the start of measurement].

In addition, it is preferable that the water vapor permeable coefficient of the resin composition as a whole be 5000×10⁻¹³ cm³·cm/cm²·sec·Pa or less, and that the water vapor permeable coefficient be 500×10⁻¹³ cm³·cm/cm²·sec·Pa or less in order to maintain a dew point performance.

The resin composition used in the insulating glass 10 according to the first embodiment of the present invention includes a butyl-type rubber, a crystalline polyolefin, a desiccant, and an inorganic filler, wherein the percentage of the butyl-type rubber with respect to the total amount of the butyl-type rubber and the crystalline polyolefin is 50 to 98% by weight, and the percentage of the crystalline polyolefin with respect to the total amount of the butyl-type rubber and the crystalline polyolefin is 2 to 50% by weight, wherein the ratio of the inorganic filler to the total of 100 parts by weight of the butyl-type rubber and the crystalline polyolefin is 200 parts by weight or less.

The above-described butyl-type rubber refers to isobutylene homopolymers and copolymers thereof with other monomers, and their modifications. As a copolymer, a copolymer obtained by copolymerizing with a relatively small amount of isoprene (usually called butyl rubber) is preferable. Modifiers include halogenated butyl rubber and partially cross-linked butyl rubber. Particularly preferred butyl-type rubber is a copolymer of isobutylene and isoprene, commonly referred to as butyl rubber, and partially cross-linked butyl rubber.

As described above, as a method of setting the melt viscosity at 120 °C to 0.6 kPa·s or more and 7.0 kPa or less, and setting the storage elastic modulus E' at 25 °C to 15 MPa or more and 60 MPa or less, there is a method of adjusting the molecular weight of the butyl-type rubber. This point is explained below.

The thermoplastic resin composition used as a material for the spacer 20 of the insulating glass 10 according to the present embodiment contains a butyl-type rubber. The butyl-type rubber contained in the thermoplastic resin composition contains two types of materials: a high molecular weight side material forming a high molecular weight butyl-type rubber and a low molecular weight side material forming a low molecular weight butyl-type rubber.

Here, although the chemical structure of the high molecular weight butyl-type rubber and the low molecular weight butyl-type rubber is almost the same, their molecular weights are different. Because the chemical structure is the same, gas permeability, chemical resistance and the like are the same, but physical properties such as melt viscosity and elastic modulus are different due to the different molecular weights. The high molecular weight butyl-type rubber is a block-shaped solid that exhibits elastomeric properties. On the other hand, the low molecular weight butyl-type rubber exhibits viscous liquid and adhesive properties.

In the insulating glass 10 according to the present embodiment, in order to increase the fluidity (decrease the melt viscosity) at high temperatures while maintaining the elastic modulus at room temperature, the difference in physical properties due to the molecular weight of the butyl-type rubber is used. Hereinafter, the details will be described.

In order to reduce the melt viscosity, because the molecular weight of the high molecular weight butyl-type rubber has a significant influence, it is preferable to use a material having a lower molecular weight in a range indicating the physical properties (high elastomericity and elasticity) of the high molecular weight butyl-type rubber in selecting the high molecular weight butyl-type rubber. Specifically, as the high molecular weight butyl-type rubber, it is preferable to use a material having a number average molecular weight of 55,000 or more and 150,000 or less, and it is more preferable to use a material having a number average molecular weight of 60,000 or more and 120,000 or less. Further, it is more preferable to use a material having a number average molecular weight of 65,000 or more and 100,000 or less, and it is particularly preferable to use a material having a number average molecular weight of 70,000 or more and 80,000 or less.

The percentage of the high molecular weight butyl-type rubber with respect to the total weight is preferably 15 to 35% by weight, more preferably 16 to 30% by weight, and even more preferably 17 to 25% by weight. When the percentage is more than 15% by weight, it can increase the elasticity modulus at room temperature. If it is 35% by weight or less, the melt viscosity at high temperature can be reduced.

When a butyl type rubber at a lower molecular weight side is selected from among high molecular weight butyl type rubbers as the high molecular weight butyl type rubber, a decrease in the elastic modulus may occur at a room temperature, and problems may occur in the shape retention property as the pair glass, such as, e.g., plate misalignment. Therefore, in order to reduce the melt viscosity and maintain the elastic modulus at a room temperature, in the selection of the low molecular weight butyl type rubber, a material at a higher molecular weight side is preferably selected within a range in which the physical properties (i.e., high viscosity) of the low molecular weight butyl type rubber are exhibited. Specifically, as the low molecular weight butyl type rubber, it is preferable to use a material having a number average molecular weight of 35000 or more and 50000 or less, and it is more preferable to use a material having a number average molecular weight of 38000 or more and 45000 or less. The percentage of the low molecular weight butyl-type rubber with respect to the total weight is preferably 15 to 35% by weight, more preferably 16 to 30% by weight, and even more preferably 17 to 25% by weight. If it is 15% by weight or more, the melt viscosity can be reduced at high temperatures. If it is not more than 35% by weight, the modulus of elasticity at room temperature can be increased.

By selecting the materials of butyl type rubbers as described above, it is possible to manufacture and configure the high-quality insulating glass 10 including the spacer 12 capable of increasing the productivity while maintaining the elastic modulus at a room temperature and reducing the melt viscosity at a high temperature.

Next, materials other than butyl-type rubber will be described.

A crystalline polyolefin is referred to as a homopolymer of olefin such as ethylene, propylene and copolymers thereof with another monomer, and a modified form thereof, which has crystalline properties. Preferably, the polymer structure is a syndiotactic structure or an isotactic structure, although other structures may be included. Ethylene and propylene are particularly preferable as olefins.

The copolymer includes a copolymer of two or more types of olefins, or a copolymer of an olefin with another monomer. The copolymer of ethylene or propylene with another monomer that does not inhibit crystallinity is suitable. As the copolymer, a block copolymer is more appropriate than an alternating copolymer and a random copolymer. A modifier includes a crystalline polyolefin to which a functional group such as an anhydride, carboxyl, and epoxy group is introduced.

The crystalline polyolefin is polyethylene and polypropylene, which are substantially homopolymers. For example, low-density polyethylene, medium-density polyethylene, high-density polyethylene, and the like can be used as the polyethylene. The crystallinity of the crystalline polyolefin is preferably 30% or more, and particularly preferably 50% or more. For example, typical crystallinity values for conventional crystalline polyolefins are 50 to 60% for low density polyethylene, 75 to 90% for high density polyethylene, and 55 to 65% for polypropylene. Although the molecular weight is not particularly limited, a number average molecular weight of about 200,000 to 800,000 for polyethylene and about 100,000 to 400,000 for polypropylene is suitable.

As described above, because polyethylene and polypropylene have high crystallinity, polyethylene and polypropylene have moisture permeability lower than those of butyl-type rubbers. Among them, those that exhibit a significantly low melt viscosity have a lower melt viscosity of the composition and improve moldability of the composition more than those of the butyl-type rubber alone. Accordingly, adding various inorganic fillers becomes possible to achieve higher hardness resin compositions for spacers, and is particularly preferable from an economic standpoint.

The percentage of crystalline polyolefin with respect to the total amount of the butyl-type rubber and the crystalline polyolefin in the resin composition described above is 2 to 50% by weight, and preferably 5 to 40% by weight. When the percentage of the crystalline polyolefin is less than 2% by weight, it is difficult to highly harden the butyl-type rubber, and when the percentage is greater than 50% by weight, the resin composition mainly expresses the properties of the crystalline polyolefin, and thus the characteristics of the butyl-type rubber are unlikely to be expressed. When the percentage of the crystalline polyolefin is too excessive, phase separation is significantly expressed, and sometimes the surface of the resin composition becomes rough. The percentage of the crystalline polyolefin with respect to the sum of the butyl rubber and the crystalline polyolefin is more preferably 20% or less, more preferably 15% or less, particularly preferably 12% or less, more preferably 10% or less, and even more preferably 8% or less, so that the resin composition does not have a rough surface.

When inorganic fillers are added, the percentage of crystalline polyolefin with respect to the total amount of butyl-type rubber and crystalline polyolefin is reduced. For example, when more than 50 parts by weight of an inorganic filler is added to a total of 100 parts by weight of a butyl-type rubber and crystalline polyolefin, the percentage of the crystalline polyolefin with respect to the total amount of the butyl-type rubber and the crystalline polyolefin is 2 to 20% by weight, which is sufficient to exert an effect for the purpose.

Thus, a substantially effective amount of inorganic filler can be added to the resin composition comprising a butyl-type rubber and a crystalline polyolefin. The substantially effective amount means one or more parts by weight with respect to a total of 100 parts by weight of the butyl-type rubber and the crystalline polyolefin. The upper limit of the amount of the inorganic filler is 200 parts by weight, preferably 150 parts by weight, more preferably 130 parts by weight, particularly preferably 100 parts by weight, and more preferably 90 parts by weight, because incorporating too much the inorganic filler increases the melt viscosity of the composition and decreases the tensile strength and tear strength. The preferred lower limit of the formulating amount in the case of an inorganic filler formulation is 10 parts by weight, more preferably 20 parts by weight, more preferably 25 parts by weight, particularly preferably 50 parts by weight, more preferably 70 parts by weight, and even more preferably 80 parts by weight.

As the inorganic filler, calcium carbonate, talc, mica, carbon black and the like, which are normally used as an inorganic filler, can be used alone or in combination with two or more kinds.

Before such a resin composition is used at least for final use, it is highly effective that the butyl-type rubber and the crystalline polyolefin contained therein be mixed at a high temperature. The high temperature in this mixture means a temperature greater than or equal to the crystalline melting point of the crystalline polyolefin. The temperature of this mixture needs to be less than or equal to the decomposition point of the butyl-type rubber, and the temperature does not preferably exceed about 300 °C, which is the decomposition point of the ordinary butyl-type rubber. Especially, the temperature is preferably 200 °C or less from the viewpoint of productivity. Thus, preferably, the crystalline polyolefin also has a crystalline melting point of 200 °C or less.

More preferably, the resin material for the spacer changes hardness as little as possible in the operating temperature range. In order to meet these requirements, a crystalline polyolefin having a crystalline melting point above the normal upper limit of use is preferred. The normal upper operating temperature limit of resin materials for building materials is about 80 °C.

Because the crystalline polyolefin is constrained by the cohesive force of the crystalline phase, even in the temperature range above the glass transition temperature, the sudden drop in hardness and a fluidized state seen in the amorphous resin do not occur below the crystalline melting point. Conversely, a significant decrease in melt viscosity is observed at the crystalline melting point, and an effect is expected of improving the kneading performance with the butyl-type rubber.

Such a resin composition may contain a tackifier, a desiccant and an additive such as carbon black, talc and the like, which may generally be incorporated into the resin material for spacers. Particularly, when the resin composition is used as a spacer, it is preferable to combine a desiccant, such as zeolite, silica gel, or alumina, a tackifier, a plasticizer, a silane coupling agent, and various stabilizers.

In particular, it is preferable to incorporate a desiccant, such as zeolite, into the resin composition by weight from 5 to 30%. It is also preferable to add 200 parts by weight or less of polyisobutylene, particularly 5 to 150 parts by weight of polyisobutylene to 100 parts by weight of butyl-type rubber other than polyisobutylene in order to provide the adhesion effect and the plasticizing effect.

Alternatively, a tackifier may be added. The viscoelastic temperature characteristics can be controlled by containing the tackifier. As a tackifier, a compound generally known in the art can be used, but from the viewpoint of weather resistance, a compound having a structure that absorbs less ultraviolet light is preferable. Especially, a tackifier of the hydrogenated dicyclopentadiene system is preferable in terms of weather resistance.

In addition, the additive may be formulated with 0 to 5% by weight. The additive herein means, for example, a hydrolyzable silyl group-containing compound such as a lubricant, a pigment, an antistatic agent, a tackifier, a plasticizer, an antiaging agent, a heat stabilizer, an antioxidant, a silane coupling agent and the like, a blowing agent, a filler containing an inorganic filler and the like, and the term "additive" used elsewhere means an additive to which a tackifier is added after removing the inorganic filler from the additive.

Taken together, the particularly preferred resin percentage for spacers is 30 to 55% by weight of butyl-type rubber, 1 to 8% by weight of a crystalline polyolefin, 15 to 35% by weight of an inorganic filler, and 20 to 40% by weight of a desiccant and an additive (in this case, of course, the percentage of butyl rubber with respect to the total of the butyl rubber and the crystalline polyolefin is 50 to 98% by weight, and the percentage of the crystalline polyolefin is 2 to 50% by weight).

Preferably, these resin compositions are manufactured by mixing butyl-type rubber and crystalline polyolefin as described above at least at a temperature equal to or higher than the crystalline melting point of the crystalline polyolefin and equal to or lower than the decomposition point of the butyl rubber. This mixing temperature is preferably 100 °C to 200 °C, particularly 120 °C to 180 °C. Other formulations and additives may be mixed at the same time, either before or after mixing.

The composition of the present invention is substantially a thermoplastic composition which can be mixed in a mixer such as a conventional melt mixing extruder and a kneader. In addition, molding may be carried out in succession with the above mixing operation. The composition can also be made into a molding material, such as a pellet, followed by molding. A molten molding method, such as an extrusion molding method or an injection molding method, can be used for molding.

In addition, the insulating glass can be manufactured by disposing the molded product at an edge of an insulating glass material in which two or more glass sheets are disposed opposite to each other sequentially to the forming operation. In this case, the high temperature composition output from the molding machine is used to obtain a high adhesion to the glass sheet. The composition can be applied to the insulating glass material using an apparatus such as an applicator while inhibiting the temperature drop of the composition. The apparatus is preferably able to heat the composition.

The resin composition for the spacer according to the present invention is not limited to the above composition and percentage, but a spacer having a preferable JIS A hardness and a water vapor transmission coefficient is obtained in the present invention at the above mixture proportion.

The glass sheet used in forming the insulating glass according to the present invention is not limited to particular glass, and includes a window commonly used in a building material and a vehicle, a glass sheet such as a door, tempered glass, laminated glass, glass with a metal net, heat absorbing glass, and further a glass sheet having a thin coating of metal or another inorganic substance on the surface such as heat reflecting glass and low reflection glass, an acrylic resin sheet called organic glass, a polycarbonate sheet and the like.

In addition, the insulating glass may be composed of two glass sheets or three or more glass sheets.

### [Second Embodiment]

FIG. 2 is a diagram showing an example of insulating glass 11 according to a second embodiment of the present invention. The insulating glass 11 according to the second embodiment differs from the insulating glass 10 according to the first embodiment in that an adhesive layer 40 is provided between glass sheets 1a and 1b and a spacer 20. Thus, the insulating glass 11 according to the second embodiment of the present invention is formed by applying an adhesive dissolved in a solvent to the glass surface on which the spacer 20 abuts. The adhesive layer 40 is preferably provided for long-term reliability. Because the components other than the adhesive layer 40 are the same as the insulating glass 10 according to the first embodiment, the same reference numerals are given to the corresponding components and the description thereof is omitted.

As shown in FIG. 2, the adhesive layer 40 may be provided in a region S2 that is wider than a region S1 to which the spacer 20 is provided. This ensures adhesion between the spacer 20 and the glass sheets 1a and 1b. Further, in FIG. 2, for ease of understanding, the adhesive layer 40 is depicted as a thick layer. However, the thickness t of the adhesive layer 40 is 50 µm or less, and may be 20 um to 30 µm, respectively, compared to the thickness of the spacers of 6 mm to 12 mm. The thickness of the adhesive layer 40 may be in a range of 1 µm to 20 µm, for example, about 5 µm, if the adhesive layer 40 is configured to be as thin as possible to the extent that adhesion can be secured. When the thickness t of the adhesive layer 40 is to be thin, 2 µm to 10 µm is preferable, and 3 to 7 µm is more preferable.

Because the thermoplastic resin composition constituting the spacer material is hydrophobic and the glass sheets 1a and 1b are hydrophilic, the adhesiveness of both is required to be secured. However, as long as the adhesiveness of both is secured, various adhesives can be used. For example, a urethane-based adhesive made from a derivative of soft polyolefin-based polyol, a non-yellowing isocyanate and a non-yellowing isocyanate may be used for weather resistance and adhesion. The urethane-based adhesive may contain at least a polyol and an isocyanate, and may also contain a silane coupling agent, if desired, to ensure adhesion with the glass sheet. In addition to the soft polyolefin-based polyol described above, the polyol may be a polyester polyol or a polyacrylic polyol and may be a urethane resin obtained by causing the polyol to react with the non-yellowing isocyanate. The isocyanate may be a yellowish-free isocyanate or a derivative of a yellowish-free isocyanate. Thus, the urethane-based adhesive may contain at least one of a polyester polyol, a polyacrylic polyol, a soft polyolefinic polyol, and urethane resin obtained by causing the polyol to react with the non-yellowing isocyanate, and at least one of the non-yellowing isocyanate and a derivative of the non-yellowing isocyanate, optionally further containing a silane coupling agent and the like. The polyol means a multifunctional alcohol having one or more hydroxyl groups per molecule.

Here, the polyol contained in the urethane-based adhesive preferably has a glass transition point Tg greater than 20 °C. Accordingly, the initial strength at the time of adhesion can be secured, and it is possible to prevent or reduce occurrence of sheet misalignment when the high-temperature butyl-type rubber and the glass sheet are bonded together. Preferably, the molecular weight of the polyol is in a range of 2000 to 50,000. This ensures long-term reliability such as heat resistance and weather resistance. In addition, the acid value of the polyol is preferably less than 3 KOH mg/g. This ensures the stability and workability of the adhesive solution. The acid value is a number of mg of potassium hydroxide required to neutralize the free fatty acids present in 1 g of polyol, indicating the degree of purification of the polyol, and the degree of purification increases as the free fatty acids decrease.

Here, the adhesive for bonding the glass sheets 1a and 1b to the resin composition containing the butyl-type rubber used as the material of the spacer 20 may be an adhesive composed of (A) a mixture of a terminal reactive oligomer having repeating units of a divalent hydrocarbon group of 4 carbon atoms and a compound capable of reacting with the terminal functional group of the oligomer, and (B) a reaction product of a terminal reactive oligomer having repeating units of a divalent hydrocarbon group of 4 carbon atoms and a compound capable of reacting with the terminal functional group of the oligomer.

For example, the terminal reactive oligomer having a divalent hydrocarbon group having 4 carbon atoms as the repeating unit is a compound containing a repeating unit derived from a hydrocarbon-type monomer having 4 carbon atoms and having a reactive functional group at the oligomer terminus such as a hydroxyl group, a carboxyl group, an amino group, a mercapto group, an epoxy group, an isocyanate group and the like. This is a compound that can become a high molecular weight polymer that functions as an adhesive by causing its functional group to react with a compound having a functional group that can react with the functional group, thereby extending a chain or forming a bridge.

The lower limit of the molecular weight of the terminal reactive oligomer is not particularly limited, but is normally about 2000. The upper limit is not particularly limited, but is about 10,000. A molecular weight of 500,000 to 10,000 is preferred, and a molecular weight of 1000 to 5000 is particularly preferred. The terminal reactive oligomer is also preferably a substantially linear oligomer. The relatively low molecular weight oligomer may also be branched oligomer, or three or more functional oligomers having a branch with a reactive functional group at each end.

The end-reactive oligomer preferred in the insulating glass 11 according to the second embodiment of the invention is a monopolymer of 1-butene, a homopolymer of isoprene, a copolymer of 1-butene and isoprene, a hydride of a monopolymer of butadiene (1,2-polybutadiene or 1,4-polybutadiene), a monomer having 4 carbon atoms or more, such as 1-butene, isoprene, and butadiene, a copolymer of pentadiene, styrene, and the like, and its hydride. The most preferred terminal reactive oligomers are a hydride of a homopolymer of butadiene and a homopolymer of isoprene.

The functional group in the terminal reactive oligomer includes hydroxyl, carboxyl, amino, mercapto, epoxy, and isocyanate groups. Hydroxyl or carboxyl groups are preferred, and hydroxyl groups are particularly preferred.

A compound having two or more functional groups capable of reacting with the terminal functional group of the aforementioned oligomer is used as the compound having the functional group capable of reacting with the functional group of the aforementioned terminal reactive oligomer.

For example, the hydroxyl terminal oligomer can react with a chain extending agent made from a polyisocyanate to form polyurethane, and the hydroxyl terminal oligomer can react with a polycarboxylic acid or its acid chloride, an alkyl ester, or the like to form polyester. Similarly, a carboxyl-terminal oligomer can react with polyols, polyamines, polyepoxides and the like, and an aminoterminal oligomer can react with polyepoxides, polycarboxylic acids or anhydrides thereof and the like. A particularly preferred combination of a terminal reactive oligomer and a compound capable of reacting with a terminal functional group of the oligomer in the insulating glass 11 according to a second embodiment of the present invention is a combination of a hydroxyl terminal oligomer and a compound made from a polyisocyanate or a polycarboxylic acid or a reactive acid derivative thereof.

Also, the above-described adhesive may be supplemented with a silane coupling agent as necessary. As noted above, the silane coupling agent is used to enhance adhesion to glass.

Examples of the silane coupling agent include an epoxysilane such as 3-glycidoxypropyltrimethoxysilane, 3-glycidoxypropyltriethoxysilane, aminosilane such as 3-aminopropyltrimethoxysilane, 3-aminopropylethoxysilane, 3-triethoxysilyl-N-(1,3-dimethylbutyridene)propylamine, and the like.

In addition, an additive such as an antioxidant, a wetting agent, a defoamer and the like and an organic solvent may be added to the adhesive as necessary.

### [Manufacturing Method]

Next, a method for manufacturing the insulating glass 10 and 11 according to the first and second embodiments will be described.

FIG. 3 is a diagram illustrating an example of a glass plate arrangement process. In the glass plate arrangement process, two glass plates 1a and 1b are arranged facing each other. When the insulating glass 11 according to the second embodiment is manufactured, a process of applying an adhesive to the region where the spacer 20 is provided and then forming an adhesive layer 40 is provided prior to this step. As shown in FIG. 2, as necessary, the adhesive layer 40 may be optionally provided in a region larger than the spacer 20, that is, a region containing the spacer 20 and further larger than the spacer 20, or alternatively may be formed in a region smaller than the spacer 20. Moreover, it goes without saying that the adhesive layer 40 may be formed in the same region as the spacer 20. After the adhesive is airdried, the two glass plates 1a and 1b are held at a predetermined distance (for example, 6 mm and 12 mm) as shown in Fig. 3. However, the distance between the two glass plates 1a and 1b can be determined according to the application and is not limited thereto.

On the other hand, when the insulating glass 10 according to the first embodiment is manufactured, the two glass plates 1a and 1b, which are not coated with any coating, are disposed facing each other at a predetermined distance.

Next, the above-mentioned thermoplastic composition is formed by melting the thermoplastic composition at a temperature of, for example, 150 °C or less, for example, at a predetermined temperature in a range of 110 to 130 °C, while using a general-purpose extruder having a cylinder of suitable diameter as shown in FIG. 4, and by disposing the thermoplastic composition between the two glass sheets while extruding the thermoplastic composition from a die having a suitable tip shape. A typical extruder may be used as the extruder, and the extruder may have a configuration, as shown in FIG. 4, such that a molten thermoplastic composition is fed from a hopper 50 and the molten thermoplastic composition fed into a barrel 60 is pushed forward by a screw 70 and extruded from a tip die 80 into a predetermined region.

Herein, in the conventional forming process, a spacer material has high viscosity, and thermoplastic resin composition needs to be heated to a high temperature of about 180 °C or more. However, the thermoplastic resin composition used in the insulating glass 10 and 11 in accordance with the present embodiment is configured to be able to be processed by extrusion molding at a temperature of 150 °C or less, so that a predetermined region between two glass sheets 1a and 1b can be filled with the spacer 20 at a low temperature and extrusion molding can be performed. After the molten thermoplastic composition is fed into the predetermined region between the glass sheets 1a and 1b, the two glass sheets 1a and 1b are pressurized from the outside, and the two glass sheets 1a and 1b are fixed. The thermoplastic resin composition is then cooled and solidified to form the spacer 20. This completes the insulating glass 10, 11, as shown in FIG. 1 or FIG. 2. In addition, because the thermoplastic resin composition is already at a high temperature during pressurization, it need not be heated or may be further heated.

The method of double-grazing is only an example, and the method of manufacturing the insulating glass according to the present invention is not limited to the above-described method. For example, a spacer having a desired shape may be molded from the resin composition in advance, and the spacer may be bonded by thermal compression bonding, for example, with two sheets of glass.

### [working Examples]

Hereinafter, working examples of producing insulating glass according to the present embodiments will be described.

### <<Examples of Resin Compositions for Spacers>>

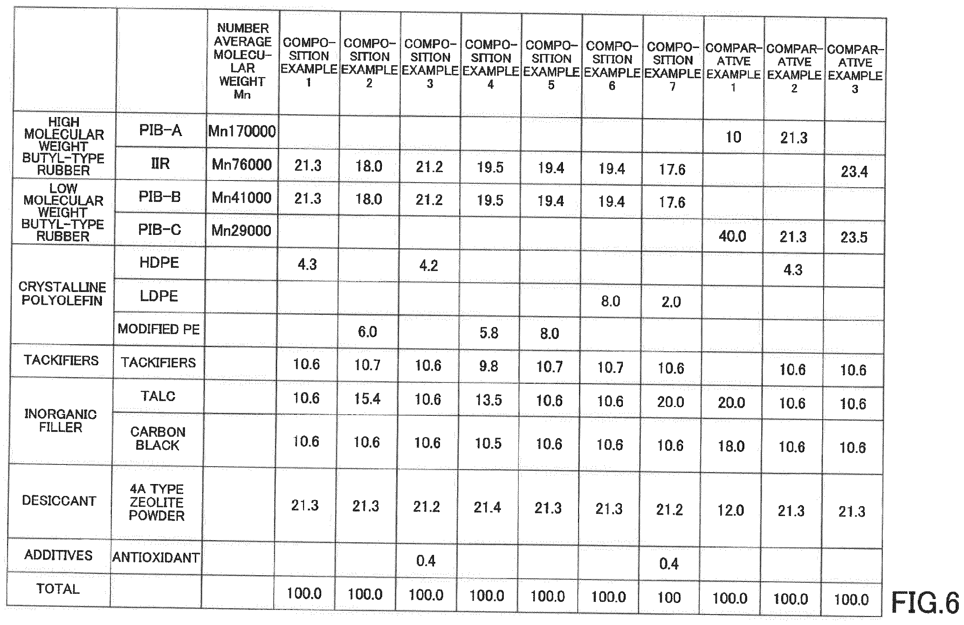

FIG. 6 shows Composition Examples 1 to 7 corresponding to Examples and Comparative Examples 1 to 3. Comparative Example 2 has the same composition as that of Example 5 described as a working example in Japanese Unexamined Patent Application Publication No. 10-114551. Respective values represent a mass percentage with respect to 100 parts by weight. As for the butyl-type rubber, four types of butyl-type rubber having different number-average molecular weights are used. Therefore, the compositions including respective types are shown.

Composition Example 1 shows a composition with the highest percentage of butyl-type rubber, and Composition Example 7 shows a composition with the lowest percentage of butyl-type rubber and the highest percentage of talc.

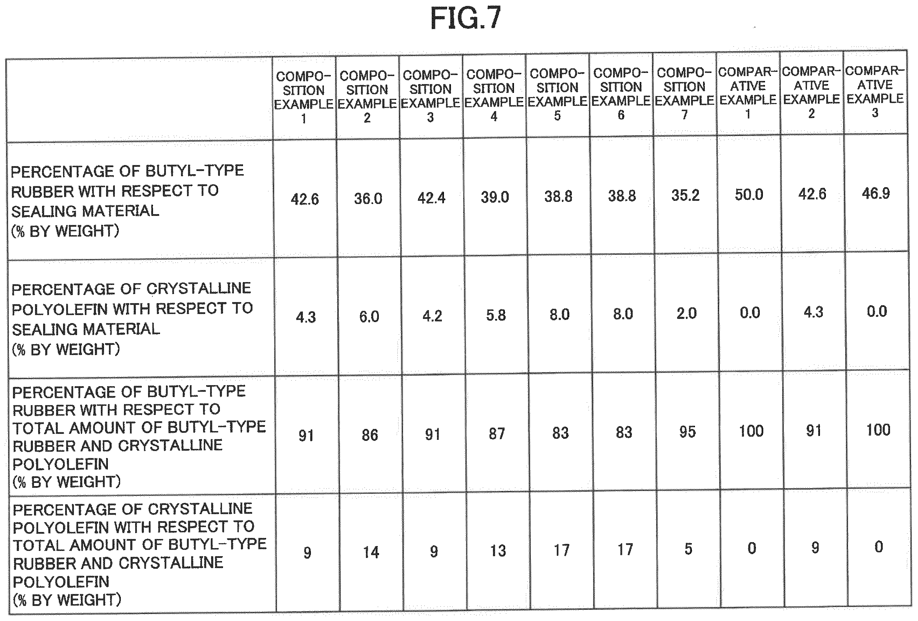

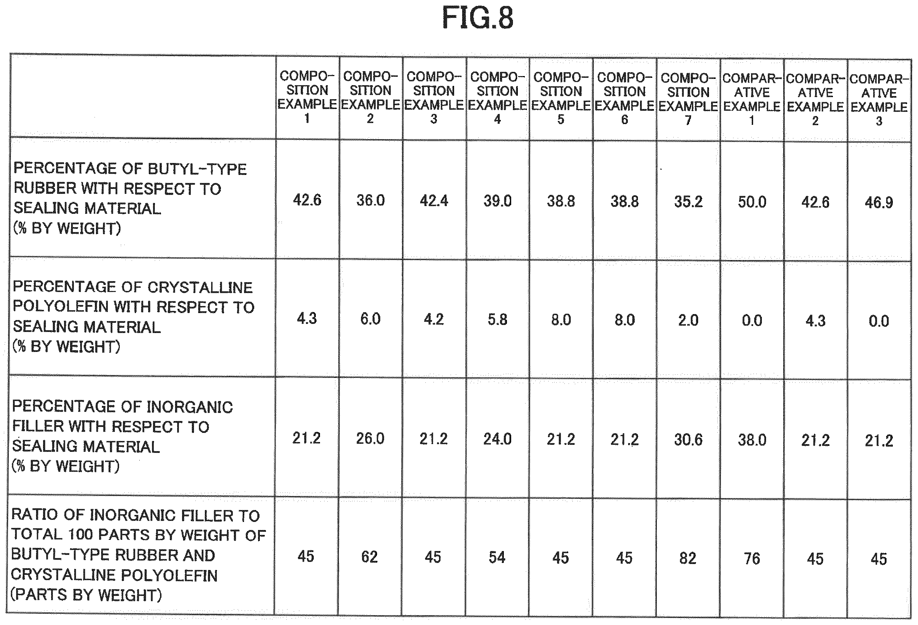

FIG. 7 is a diagram showing an overall composition shown in FIG. 6 converted into a percentage of butyl-type rubber and crystalline polyolefin. FIG. 8 is a diagram showing an overall composition shown in FIG. 6 by converting a ratio of the inorganic filler to the total 100 parts by weight of the butyl-type rubber and the crystalline polyolefin. FIGS. 7 and 8 are shown to facilitate comparison with the claims.

In FIG. 6, the high molecular weight butyl-type rubber PIB-A shows the polyisobutylene having the number average molecular weight Mn of 17000; the high molecular weight butyl-type rubber IIR shows the butyl-type rubber having the number average molecular weight Mn of 76000; the low molecular weight butyl-type rubber PIB-B shows the polyisobutylene having the number average molecular weight Mn of 41000; and the low molecular weight butyl-type rubber PIB-C shows the polyisobutylene having the number average molecular weight Mn of 29000.

The number average molecular weights Mn of these butyl-type rubbers were measured using a THF solvent and a polystyrene standard sample using a size exclusion chromatography device manufactured by Tosoh Corporation (main body: HLC-8220 GPC, RI detector guard column: TSKgen guard column SuperHZ-L, column: TSKgen SuperHZ2000, TSKgel SuperHZ2500, and TSKgel SuperHZ4000).

As for crystalline polyolefins, HOPE shows a high density polyethylene with a melting point of 133 °C at a melt flow rate MFR of 20 g / 10 min (according to JIS K6922-2) . Also, LDPE shows low density polyethylene with a melting point of 102°C at a melt flow rate MFR of 45 g/10 min (according to JIS K6922-2). Furthermore, the modified PE has a melting point of 98 °C with a melt flow rate MFR of 80 g / 10 min (according to JIS K6922-2), indicating polyethylene with an introduced acid anhydride and acrylic acid ester.

As for the tackifier, a DCPD (dicyclopentadiene) type hydrogenated hydrocarbon resin with a softening point of 125 °C was used.

As for the inorganic filler, an inorganic filler containing talc having an average particle size of 2 µm and high abrasion furnace type carbon black was used.

A 4A type zeolite powder was used as a desiccant. Phenol type antioxidants were used as an additive.

In the composition shown in FIG. 6, after the components except for the desiccant were kneaded to obtain the thermoplastic resin composition having a JIS A hardness of 10 to 90, a desiccant made from a 4A type dry zeolite powder was added, and the desiccant was further kneaded to uniformly disperse the desiccant to obtain the thermoplastic resin composition for a spacer.

In Composition examples corresponding to Examples 1 to 7, butyl rubber having the number average molecular weight of 76,000 on the lower molecular weight side was selected in a range of 55,000 or more of the number average molecular weight indicating physical properties of the high molecular weight butyl rubber (elastomeric property, rubber-like elasticity), and polyisobutylene having the number average molecular weight of 41,000 on the higher molecular weight side was selected in a range of 50,000 or less of the number average molecular weight indicating physical properties of the low molecular weight butyl rubber (adhesiveness).

On the other hand, in Comparative Examples 1 and 2, a polyisobutylene having a molecular weight of 170,000 on the high molecular weight side was selected in a range of 55,000 or more that exhibits the physical properties (elastomer, rubber-like elasticity) of the high molecular weight butyl rubber, and a polyisobutylene having a number average molecular weight of 29,000 on the low molecular weight side was selected in a range of 50,000 or less that exhibits the physical properties (adhesiveness) of the low molecular weight butyl rubber. As for Comparative Example 3, butyl rubber having a molecular weight of 76,000 on the lower molecular weight side similar to Examples 1 to 7 was used in a range of not less than 55,000, which shows the physical properties (elastomeric properties, rubber-like elasticity) of the high molecular weight butyl rubber. However, polyisobutylene having a number average molecular weight of 29,000 on the lower molecular weight side similar to Comparative Examples 1 and 2 was used in a range of not more than 50,000, which shows the physical properties (adhesiveness) of the low molecular weight butyl rubber.

The mass percentages of the high molecular weight butyl rubber and the low molecular weight butyl rubber in Examples 1 to 7 were made approximately 20 parts by weight, respectively. Crystalline polyolefins were various combinations of three types of HOPE, LDPE, and denatured PE.

The percentage of the mass of the high molecular weight butyl-type rubber and the low molecular weight butyl-type rubber in Comparative Examples 1 to 3 were varied. In Comparative Example 1, the percentage of the low molecular weight butyl-type rubber was increased, and in Comparative Example 2, the high molecular weight butyl-type rubber and the low molecular weight butyl-type rubber were set as the same mass parts. In Comparative Example 3, the mass parts of the high molecular weight butyl-type rubber and the low molecular weight butyl-type rubber were almost the same as each other, but only the low molecular weight butyl-type rubber was excluded from the scope of Examples.

### <<Examples of Insulating Glass>>

Next, the results of the evaluation of the insulating glass using the resin compositions for spacers of Examples 1 to 7 and Comparative Examples 1 to 3 described above are shown.

In any example, the thermoplastic resin composition of the spacer material was extruded using a rubber extruder having a cylinder with a diameter of 40 mm to maintain a 6 mm or 12 mm distance between two float glass sheets of size 350 * 500 mm, 3 mm or 5 mm in thickness, with a spacer extruded on the outer periphery of the glass sheets to obtain the insulating glass 11 having the configuration shown in FIG. 2.

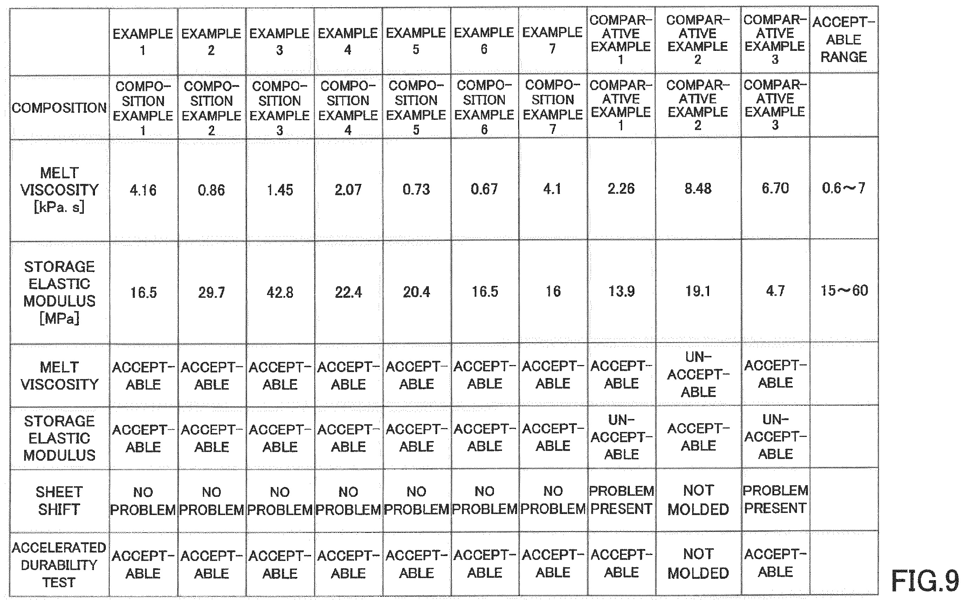

FIG. 9 is a table showing Composition Examples 1 to 7 corresponding to Examples 1 to 7 and the evaluation results of Comparative Examples 1 to 3.

The evaluation method of the evaluation items shown in FIG. 9 is as follows.

As for melt viscosity, Capillogragh 1C manufactured by Toyo Seiki Seisaku-sho, Ltd. was used. As for capillary, capillary length of 10 mm and capillary diameter of 2 mm were used. As for a furnace, a furnace having a furnace body diameter of 9.55 mm was used. The melt viscosity at a temperature of 120 °C and a shear rate of 100/s was used as the reference. Acceptance was defined as 0.6 kPa·s or more and 7.0 kPa·s or less.

As for the storage modulus (dynamic elastic modulus), DVA-200, a dynamic viscoelasticity measuring device manufactured by IT Measuring Co., Ltd., was used, and a tensile test was conducted in which the temperature was raised at 5 °C/min in a constant-speed temperature rising mode; for a sample with length between grips of 20 mm; the width of 5 mm; and the thickness of 0.6 mm; where the deformation was 0.1%; the static/dynamic ratio was 2; and the frequency was 1 Hz. The storage elastic modulus at a temperature of 25 °C was used as a reference. A value of 15 MPa or more and 60 MPa or less was considered acceptable.

As for a plate shift test, the obtained glass sheet of one side of each insulating glass was fixed, and the load of 13 kg was applied to the other glass sheet, and the downward displacement of the glass sheet of the load bearing side was measured under the temperature conditions of 25 °C. The displacement of 0.5 mm or less in 20 minutes was considered acceptable.

Accelerated durability tests were performed on insulating glass with a 6 mm thick spacer in accordance with JIS R 3209. JIS 3 classification determinations were recorded.

Dew point measurements were performed according to the apparatus and method described in JIS R3209.

As shown in FIG. 9, as for Examples 1 to 7, all items were acceptable or no problem. On the other hand, in Comparative Examples 1 to 3, at least one of the melt viscosity and the storage elastic modulus did not fall within the acceptable range and were not acceptable. As for a sheet shift, Comparative Examples 1 and 3 were problematic, and because molding could not be done in Comparative Example 2, the evaluation test itself could not be performed.

As described above, it has been shown that the insulating glass 11 according to Examples 1 to 7 is easier to be manufactured than the insulating glass according to Comparative Examples 1 to 3, and that a high quality insulating glass 11 can be obtained.

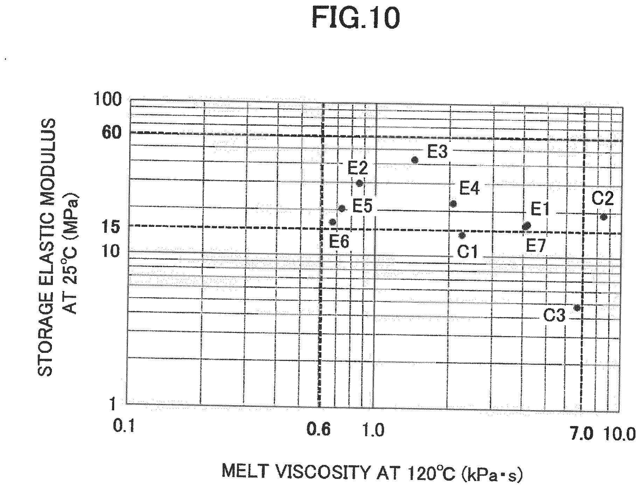

FIG. 10 is a diagram showing the results of items of melt viscosity and storage elastic modulus among the results of FIG. 9. In FIG. 10, the horizontal axis shows the melt viscosity (kPa·s) of the spacer material at 120 °C, and the vertical axis shows the storage elastic modulus (MPa) at 25 °C.

As shown in FIG. 10, a range of 0.6 kPa·s to 7.0 kPa·s or less contains the melt viscosities of Examples 1 to 7 and Comparative Examples 1 and 3 other than Example 2, and a range of 15 MPa to 60 MPa or less contains the storage elastic modulus of Examples 1 to 6 and Comparative Examples 2 other than Example 1 and Example 3. That is, only Examples 1 to 6 have the melt viscosity at 120 °C in a range of 0.6 kPa·s or more and 7.0 kPa·s or less, and the storage elastic modulus at 25 °C in a range of 15 MPa or more and 60 MPa or less, and Comparative Examples 1 to 3 are outside the range.

Thus, Examples 1 to 7 showed that high- productivity and high-quality insulating glass 10, 11 can be provided by using a butyl-type rubber spacer material including a high molecular weight butyl-type rubber having a number average molecular weight of 76,000 in a range of 55,000 to 150,000 and butyl-type rubber having a number average molecular weight of 41,000 in a range of 35,000 to 50,000.

Examples 1 to 7 have been described with reference to butyl rubber having a number average molecular weight of 76000 as a high molecular weight butyl-type rubber and polyisobutylene having a number average molecular weight of 41000 as a low molecular weight butyl-type rubber. However, a variety of materials can be selected as butyl-type rubber, and a variety of number average molecular weights can be combined as long as the number average molecular weight of the high molecular weight butyl-type rubber is not less than 55,000 and not more than 150,000, and the number average molecular weight of the low molecular weight butyl-type rubber is not less than 35,000 and not more than 50,000.

Incidentally, because the resin compositions for spacers described in the examples in Japanese Unexamined Patent Application Publication No. 10-114551 have a molecular weight average of over 150,000 and have melt viscosity over 7.0 kPa·s at 120 °C, the viscosity of the spacer material increases during melt molding of the spacer.

This application is based on and claims priority to Japanese Patent Application No. 2017-090609 filed with the Japanese Patent Office on April 28, 2017.

### DESCRIPTION OF THE REFERENCE NUMERALS

- 1a, 1b: glass plates
- 10, 11: insulating glass
- 20: spacer
- 30: air space layer
- 40: adhesive layer
- 50: hopper
- 60: barrel
- 70: screw
- 80: die

## Claims

1. An insulating glass including two or more glass sheets arranged to face each other via a spacer sandwiched between the glass sheets so as to form an air space layer between the glass sheets, the spacer being made from a thermoplastic resin composition having a JIS A hardness of 10 to 90 at 25 °C, the thermoplastic resin composition containing a butyl-type rubber, a crystalline polyolefin, a desiccant and an inorganic filler,
**characterized in that** a percentage of the butyl-type rubber is 50 to 98% by weight, and a percentage of the crystalline polyolefin is 2 to 50% by weight with respect to a total amount of the butyl-type rubber and the crystalline polyolefin,
a ratio of the inorganic filler is 200 parts by weight or less to a total of 100 parts by weight of the butyl-type rubber and the crystalline polyolefin,
melt viscosity at 120 °C is not less than 0.6 kPa·s and not more than 7.0 kPa·s, and
storage elastic modulus at 25 °C is not less than 15 MPa and not more than 60 MPa,
wherein the butyl-type rubber contains a high molecular weight butyl-type rubber and a low molecular weight butyl-type rubber,
a number average molecular weight of the high molecular weight butyl-type rubber is not less than 55000 and not more than 150000, and
a number average molecular weight of the low molecular weight butyl-type rubber is not less than 35000 and not more than 50000.

2. The insulating glass as claimed in claim 1, wherein the high molecular weight butyl-type rubber and the low molecular weight butyl-type rubber are made from a butyl rubber or a polyisobutylene.

3. The insulating glass as claimed in claim 1 or 2, wherein the spacer is bonded to the glass sheets by an adhesive.

4. The insulating glass as claimed in claim 3, wherein the adhesive is a urethane-type adhesive.

5. The insulating glass as claimed in claim 4, wherein the urethane-type adhesive contains at least one of a soft polyolefin-type polyol, a polyester polyol, a polyacrylic polyol, and a urethane resin produced by reacting a polyol with a non-yellowing isocyanate, and at least one of a non-yellowing isocyanate and a derivative of the non-yellowing isocyanate.

6. A sealing material for insulating glass usable as a spacer of insulating glass including two or more glass sheets arranged to face each other so as to form an air space layer between the glass sheets by being disposed between the glass sheets,
**characterized in that** the sealing material is made from a thermoplastic resin composition having a JIS A hardness of 10 to 90 at 25 °C,
the thermoplastic resin composition containing a butyl-type rubber, a crystalline polyolefin, a desiccant and an inorganic filler,
a percentage of the butyl-type rubber is 50 to 98% by weight, and a percentage of the crystalline polyolefin is 2 to 50% by weight with respect to a total amount of the butyl-type rubber and the crystalline polyolefin,
a ratio of the inorganic filler is 200 parts by weight or less with respect to a total of 100 parts by weight of the butyl-type rubber and the crystalline polyolefin,
melt viscosity at 120 °C is not less than 0.6 kPa·s and not more than 7.0 kPa·s, and storage elastic modulus at 25 °C is not less than 15 MPa and not more than 60 MPa,
wherein the butyl-type rubber contains a high molecular weight butyl-type rubber and a low molecular weight butyl-type rubber,
a number average molecular weight of the high molecular weight butyl-type rubber is not less than 55000 and not more than 150000, and
a number average molecular weight of the low molecular weight butyl-type rubber is not less than 35000 and not more than 50000.

7. A method of manufacturing insulating glass, **characterized by**
a step of arranging two glass sheets so as to face each other; and
a step of filling a predetermined area between the two glass sheets with a spacer material while setting a temperature at 150 °C or less,
wherein the spacer material is made from a thermoplastic resin composition having a JIS A hardness of 10 to 90 at 25 °C,
the thermoplastic resin composition contains a butyl-type rubber, a crystalline polyolefin, a desiccant and an inorganic filler,
a percentage of the butyl-type rubber is 50 to 98% by weight, and a percentage of the crystalline polyolefin is 2 to 50% by weight with respect to a total amount of the butyl-type rubber and the crystalline polyolefin,
a ratio of the inorganic filler is 200 parts by weight or less to a total of 100 parts by weight of the butyl-type rubber and the crystalline polyolefin,
melt viscosity at 120 °C is not less than 0.6 kPa·s and not more than 7.0 kPa·s, and
storage elastic modulus at 25 °C is not less than 15 MPa and not more than 60 MPa,
wherein the butyl-type rubber contains a high molecular weight butyl-type rubber and a low molecular weight butyl-type rubber,
wherein a number average molecular weight of the high molecular weight butyl-type rubber is not less than 55000 and not more than 150000, and
wherein a number average molecular weight of the low molecular weight butyl-type rubber is not less than 35000 and not more than 50000.

8. The method of manufacturing the insulating glass as claimed in claim 7, wherein the high molecular weight butyl-type rubber and the low molecular weight butyl-type rubber are made from a butyl rubber or a polyisobutylene.

9. The method of manufacturing the insulating glass as claimed in claim 7 or 8, wherein the step of filling the spacer material is performed by extrusion molding.

10. The method of manufacturing the insulating glass as claimed in any one of claims 7 to 9, further **characterized by** a step of fixing the two glass sheets by pressurizing the two glass sheets from the outside after the step of filling the spacer material.

11. The method of manufacturing the insulating glass as claimed in any one of claims 7 to 10, further **characterized by** a step of applying an adhesive to the predetermined area of each of the two glass sheets before the step of arranging the two glass sheets so as to face each other.

12. The method of manufacturing the insulating glass as claimed in claim 11, wherein the adhesive is applied to an area including the predetermined area and larger than the predetermined area.

13. The method of manufacturing the insulating glass as claimed in claim 11 or 12, wherein the adhesive is a urethane-type adhesive.

14. The method of manufacturing the insulating glass as claimed in claim 13, wherein the urethane-type adhesive contains at least one of a soft polyolefin-type polyol, a polyester polyol, a polyacrylic polyol, and a urethane resin produced by causing a polyol to react with a non-yellowing isocyanate, and further contains at least one of a non-yellowing isocyanate and a derivative of the non-yellowing isocyanate.

## Patentansprüche

1. Isolierglas, enthaltend zwei oder mehr Glasscheiben, die so angeordnet sind, dass sie einander über einen Abstandshalter gegenüberliegen, der eingebettet zwischen den Glasscheiben angeordnet ist, um eine Luftraumschicht zwischen den Glasscheiben zu bilden, wobei der Abstandshalter aus einer thermoplastischen Harzzusammensetzung mit einer JIS A-Härte von 10 bis 90 bei 25 °C hergestellt ist, wobei die thermoplastische Harzzusammensetzung einen Kautschuk vom Butyl-Typ, ein kristallines Polyolefin, ein Trockenmittel und einen anorganischen Füllstoff enthält,
**dadurch gekennzeichnet, dass** ein prozentualer Anteil des Kautschuks vom Butyl-Typ 50 bis 98 Gew.-% und ein prozentualer Anteil des kristallinen Polyolefins 2 bis 50 Gew.-%, bezogen auf eine Gesamtmenge des Kautschuks vom Butyl-Typ und des kristallinen Polyolefins, beträgt,
ein Verhältnis des anorganischen Füllstoffs 200 Gewichtsteile oder weniger, bezogen auf eine Gesamtmenge von 100 Gewichtsteilen des Kautschuks vom Butyl-Typ und des kristallinen Polyolefins, beträgt,
eine Schmelzviskosität bei 120 °C nicht weniger als 0,6 kPa·s und nicht mehr als 7,0 kPa·s beträgt, und
ein elastisches Speichermodul bei 25 °C nicht weniger als 15 MPa und nicht mehr als 60 MPa beträgt,
wobei der Kautschuk vom Butyl-Typ einen Kautschuk vom Butyl-Typ mit hohem Molekulargewicht und einen Kautschuk vom Butyl-Typ mit niedrigem Molekulargewicht enthält,
ein zahlenmittleres Molekulargewicht des Kautschuks vom Butyl-Typ mit hohem Molekulargewicht nicht weniger als 55000 und nicht mehr als 150000 beträgt, und
ein zahlenmittleres Molekulargewicht des Kautschuks vom Butyl-Typ mit niedrigem Molekulargewicht nicht weniger als 35000 und nicht mehr als 50000 beträgt.

2. Isolierglas nach Anspruch 1, wobei der Kautschuk vom Butyl-Typ mit hohem Molekulargewicht und der Kautschuk vom Butyl-Typ mit niedrigem Molekulargewicht aus einem Butylkautschuk oder einem Polyisobutylen hergestellt sind.

3. Isolierglas nach Anspruch 1 oder2, wobei der Abstandshalter durch ein Haftmittel mit den Glasscheiben verbunden ist.

4. Isolierglas nach Anspruch 3, wobei das Haftmittel ein Haftmittel vom Urethan-Typ ist.

5. Isolierglas nach Anspruch 4, wobei das Haftmittel vom Urethan-Typ mindestens eines von einem weichen Polyol vom Polyolefin-Typ, einem Polyesterpolyol, einem Polyacrylpolyol und einem Urethanharz, das durch die Reaktion eines Polyols mit einem vergilbungsfreien Isocyanat hergestellt wird, und mindestens eines von einem vergilbungsfreien Isocyanat und einem Derivat des vergilbungsfreien Isocyanats enthält.

6. Dichtungsmaterial für Isolierglas verwendbar als Abstandshalter für Isolierglas, enthaltend zwei oder mehr Glasscheiben, die so angeordnet sind, dass sie einander gegenüberliegen, um eine Luftraumschicht zwischen den Glasscheiben zu bilden, indem sie zwischen den Glasscheiben angeordnet sind,
**dadurch gekennzeichnet, dass** das Dichtungsmaterial aus einer thermoplastischen Harzzusammensetzung mit einer JIS A-Härte von 10 bis 90 bei 25 °C hergestellt ist,
die thermoplastische Harzzusammensetzung einen Kautschuk vom Butyl-Typ, ein kristallines Polyolefin, ein Trockenmittel und einen anorganischen Füllstoff enthält,
ein prozentualer Anteil des Kautschuks vom Butyl-Typ 50 bis 98 Gew.-% und ein prozentualer Anteil des kristallinen Polyolefins 2 bis 50 Gew.-%, bezogen auf eine Gesamtmenge des Kautschuks vom Butyl-Typ und des kristallinen Polyolefins, beträgt,
ein Verhältnis des anorganischen Füllstoffs 200 Gewichtsteile oder weniger, bezogen auf eine Gesamtmenge von 100 Gewichtsteilen des Kautschuks vom Butyl-Typ und des kristallinen Polyolefins, beträgt,
eine Schmelzviskosität bei 120 °C nicht weniger als 0,6 kPa·s und nicht mehr als 7,0 kPa·s beträgt, und
ein elastisches Speichermodul bei 25 °C nicht weniger als 15 MPa und nicht mehr als 60 MPa beträgt,
wobei der Kautschuk vom Butyl-Typ einen Kautschuk vom Butyl-Typ mit hohem Molekulargewicht und einen Kautschuk vom Butyl-Typ mit niedrigem Molekulargewicht enthält,
ein zahlenmittleres Molekulargewicht des Kautschuks vom Butyl-Typ mit hohem Molekulargewicht nicht weniger als 55000 und nicht mehr als 150000 beträgt, und
ein zahlenmittleres Molekulargewicht des Kautschuks vom Butyl-Typ mit niedrigem Molekulargewicht nicht weniger als 35000 und nicht mehr als 50000 beträgt.

7. Verfahren zur Herstellung von Isolierglas, **gekennzeichnet durch** einen Schritt des Anordnens von zwei Glasscheiben, so dass sie einander gegenüberliegen; und
einen Schritt des Füllens eines vorbestimmten Bereichs zwischen den beiden Glasscheiben mit einem Abstandshaltermaterial, während eine Temperatur von 150 °C oder weniger eingestellt wird,
wobei das Abstandshaltermaterial aus einer thermoplastischen Harzzusammensetzung mit einer JIS A-Härte von 10 bis 90 bei 25 °C hergestellt ist,
die thermoplastische Harzzusammensetzung einen Kautschuk vom Butyl-Typ, ein kristallines Polyolefin, ein Trockenmittel und einen anorganischen Füllstoff enthält,
ein prozentualer Anteil des Kautschuks vom Butyl-Typ 50 bis 98 Gew.-% und ein prozentualer Anteil des kristallinen Polyolefins 2 bis 50 Gew.-%, bezogen auf die Gesamtmenge des Kautschuks vom Butyl-Typ und des kristallinen Polyolefins, beträgt
ein Verhältnis des anorganischen Füllstoffs 200 Gewichtsteile oder weniger, bezogen auf eine Gesamtmenge von 100 Gewichtsteilen des Kautschuks vom Butyl-Typ und des kristallinen Polyolefins, beträgt,
eine Schmelzviskosität bei 120 °C nicht weniger als 0,6 kPa·s und nicht mehr als 7,0 kPa·s beträgt und
ein elastisches Speichermodul bei 25 °C nicht weniger als 15 MPa und nicht mehr als 60 MPa beträgt,
wobei der Kautschuk vom Butyl-Typ einen Kautschuk vom Butyl-Typ mit hohem Molekulargewicht und einen Kautschuk vom Butyl-Typ mit niedrigem Molekulargewicht enthält,
ein zahlenmittleres Molekulargewicht des Kautschuks vom Butyl-Typ mit hohem Molekulargewicht nicht weniger als 55000 und nicht mehr als 150000 beträgt, und
ein zahlenmittleres Molekulargewicht des Kautschuks vom Butyl-Typ mit niedrigem Molekulargewicht nicht weniger als 35000 und nicht mehr als 50000 beträgt.

8. Verfahren zur Herstellung des Isolierglases nach Anspruch 7, wobei der Kautschuk vom Butyl-Typ mit hohem Molekulargewicht und der Kautschuk vom Butyl-Typ mit niedrigem Molekulargewicht aus einem Butylkautschuk oder einem Polyisobutylen hergestellt sind.

9. Verfahren zur Herstellung des Isolierglases nach Anspruch 7 oder 8, wobei der Schritt des Füllens des Abstandshaltermaterials durch Extrusionsformen durchgeführt wird.

10. Verfahren zur Herstellung des Isolierglases nach einem der Ansprüche 7 bis 9, ferner **gekennzeichnet durch** einen Schritt des Fixierens der beiden Glasscheiben durch Druckbeaufschlagung der beiden Glasscheiben von außen nach dem Schritt Füllens des Abstandshaltermaterials.

11. Verfahren zur Herstellung des Isolierglases nach einem der Ansprüche 7 bis 10, ferner **gekennzeichnet durch** einen Schritt des Auftragens eines Haftmittels auf den vorbestimmten Bereich von jeder der beiden Glasscheiben vor dem Schritt des Anordnens der beiden Glasscheiben derart, dass sie einander gegenüberliegen.

12. Verfahren zur Herstellung des Isolierglases nach Anspruch 11, wobei das Haftmittel auf einen Bereich aufgetragen wird, der den vorbestimmten Bereich einschließt und größer ist als der vorbestimmte Bereich.

13. Verfahren zur Herstellung eines Isolierglases nach Anspruch 11 oder 12, wobei das Haftmittel ein Haftmittel vom Urethan-Typ ist.

14. Verfahren zur Herstellung des Isolierglases nach Anspruch 13, wobei das Haftmittel vom Urethan-Typ mindestens eines von einem weichen Polyol vom Polyolefin-Typ, einem Polyesterpolyol, einem Polyacrylpolyol und einem Urethanharz, hergestellt, indem ein Polyol dazu gebracht wird mit einem vergilbungsfreien Isocyanat zu reagieren, enthält und ferner mindestens eines von einem vergilbungsfreien Isocyanat und einem Derivat des vergilbungsfreien Isocyanats enthält.

## Revendications

1. Verre isolant comprenant deux ou plusieurs feuilles de verre disposées face à face par l'intermédiaire d'un élément d'espacement pris en sandwich entre les feuilles de verre de manière à former une couche d'air entre les feuilles de verre, l'élément d'espacement étant fabriqué à partir d'une composition de résine thermoplastique ayant une dureté JIS A de 10 à 90 à 25 °C, la composition de résine thermoplastique contenant un caoutchouc de type butyle, une polyoléfine cristalline, un déshydratant et une charge inorganique,
**caractérisé en ce qu'**un pourcentage du caoutchouc de type butyle est de 50 à 98% en poids, et un pourcentage de la polyoléfine cristalline est de 2 à 50% en poids par rapport à une quantité totale du caoutchouc de type butyle et de la polyoléfine cristalline,
un rapport de la charge inorganique est de 200 parties en poids ou moins par rapport à un total de 100 parties en poids du caoutchouc de type butyle et de la polyoléfine cristalline,
une viscosité à l'état fondu à 120 °C n'est pas inférieure à 0,6 kPa.s et n'est pas supérieure à 7,0 kPa.s, et
un module d'élasticité de stockage à 25 °C n'est pas inférieur à 15 MPa et n'est pas supérieur à 60 MPa,
dans lequel le caoutchouc de type butyle contient un caoutchouc de type butyle à poids moléculaire élevé et un caoutchouc de type butyle à faible poids moléculaire,
un poids moléculaire moyen en nombre du caoutchouc de type butyle à poids moléculaire élevé est supérieur ou égal à 55 000 et inférieur ou égal à 150 000, et
un poids moléculaire moyen en nombre du caoutchouc de type butyle à faible poids moléculaire est supérieur ou égal à 35 000 et inférieur ou égal à 50 000.

2. Verre isolant selon la revendication 1, dans lequel le caoutchouc de type butyle à poids moléculaire élevé et le caoutchouc de type butyle à faible poids moléculaire sont fabriqués à partir d'un caoutchouc butyle ou d'un polyisobutylène.

3. Verre isolant selon la revendication 1 ou 2, dans lequel l'élément d'espacement est collé aux feuilles de verre par un adhésif.

4. Verre isolant selon la revendication 3, dans lequel l'adhésif est un adhésif de type uréthane.

5. Verre isolant selon la revendication 4, dans lequel l'adhésif de type uréthane contient au moins un polyol souple de type polyoléfine, un polyol polyester, un polyol polyacrylique et une résine uréthane produite par réaction d'un polyol avec un isocyanate non jaunissant, et au moins un isocyanate non jaunissant et un dérivé de l'isocyanate non jaunissant.

6. Matériau d'étanchéité pour verre isolant utilisable comme élément d'espacement de verre isolant comprenant deux ou plusieurs feuilles de verre disposées face à face de manière à former une couche d'air entre les feuilles de verre en étant disposées entre les feuilles de verre,
**caractérisé en ce que** le matériau d'étanchéité est fabriqué à partir d'une composition de résine thermoplastique ayant une dureté JIS A de 10 à 90 à 25 °C,
la composition de résine thermoplastique contenant un caoutchouc de type butyle, une polyoléfine cristalline, un déshydratant et un filtre inorganique,
un pourcentage de caoutchouc de type butyle est compris entre 50 et 98 % en poids, et un pourcentage de polyoléfine cristalline est compris entre 2 et 50 % en poids par rapport à la quantité totale de caoutchouc de type butyle et de polyoléfine cristalline,
un rapport du filtre inorganique est de 200 parties en poids ou moins par rapport à un total de 100 parties en poids du caoutchouc de type butyle et de la polyoléfine cristalline,
une viscosité à l'état fondu à 120 °C non inférieure à 0,6 kPa.s et non supérieure à 7,0 kPa.s, et un module d'élasticité de stockage à 25 °C non inférieur à 15 MPa et non supérieur à 60 MPa,
dans lequel le caoutchouc de type butyle contient un caoutchouc de type butyle à poids moléculaire élevé et un caoutchouc de type butyle à faible poids moléculaire,
un poids moléculaire moyen en nombre du caoutchouc de type butyle à poids moléculaire élevé n'est pas inférieur à 55 000 et n'est pas supérieur à 150 000, et
un poids moléculaire moyen en nombre du caoutchouc de type butyle à faible poids moléculaire n'est pas inférieur à 35 000 et n'est pas supérieur à 50 000.

7. Procédé de fabrication d'un verre isolant, **caractérisé par**
une étape consistant à disposer deux feuilles de verre de manière à ce qu'elles se fassent face ; et
une étape de remplissage d'une zone prédéterminée entre les deux feuilles de verre avec un matériau d'élément d'espacement tout en réglant une température inférieure ou égale à 150 °C,
dans lequel le matériau d'élément d'espacement est fabriqué à partir d'une composition de résine thermoplastique ayant une dureté JIS A de 10 à 90 à 25 °C,
la composition de résine thermoplastique contient un caoutchouc de type butyle, une polyoléfine cristalline, un déshydratant et une charge inorganique,
un pourcentage du caoutchouc de type butyle est compris entre 50 et 98 % en poids, et un pourcentage du polyoléfine cristalline est compris entre 2 et 50 % en poids par rapport à la quantité totale de caoutchouc de type butyle et de polyoléfine cristalline,
un rapport de 200 parties en poids ou moins de la charge inorganique par rapport à un total de 100 parties en poids du caoutchouc de type butyle et de la polyoléfine cristalline,
une viscosité à l'état fondu à 120 °C n'est pas inférieure à 0,6 kPa.s et n'est pas supérieur à 7,0 kPa-s, et
un module d'élasticité de stockage à 25 °C n'est pas inférieur à 15 MPa et n'est pas supérieur à 60 MPa,
dans lequel le caoutchouc de type butyle contient un caoutchouc de type butyle de poids moléculaire élevé et un caoutchouc de type butyle à faible poids moléculaire,
dans lequel un poids moléculaire moyen en nombre du caoutchouc de type butyle à poids moléculaire élevé n'est pas inférieur à 55 000 et n'est pas supérieur à 150 000, et
dans lequel un poids moléculaire moyen en nombre du caoutchouc de type butyle à poids moléculaire élevé n'est pas inférieur à 35 000 et n'est pas supérieur à 50 000.

8. Procédé de fabrication du verre isolant selon la revendication 7, dans lequel le caoutchouc de type butyle à poids moléculaire élevé et le caoutchouc de type butyle à faible poids moléculaire sont fabriqués à partir d'un caoutchouc butyle ou d'un polyisobutylène.

9. Procédé de fabrication du verre isolant selon la revendication 7 ou 8, dans lequel l'étape de remplissage du matériau d'élément d'espacement est réalisé par moulage par extrusion.

10. Procédé de fabrication du verre isolant selon l'une quelconque des revendications 7 à 9, **caractérisé en outre par** une étape de fixation des deux feuilles de verre par pressurisation des deux feuilles de verre depuis l'extérieur après l'étape de remplissage du matériau d'élément d'espacement.

11. Procédé de fabrication du verre isolant selon l'une quelconque des revendications 7 à 10, **caractérisé en outre par** une étape d'application d'un adhésif sur la zone prédéterminée de chacune des deux feuilles de verre avant l'étape de disposition des deux feuilles de verre l'une en face de l'autre.

12. Procédé de fabrication du verre isolant selon la revendication 11, dans lequel l'adhésif est appliqué sur une zone incluant la zone prédéterminée et plus grande que la zone prédéterminée.

13. Procédé de fabrication du verre isolant selon la revendication 11 ou 12, dans lequel l'adhésif est un adhésif de type uréthane.

14. Procédé de fabrication du verre isolant selon la revendication 13, dans lequel l'adhésif de type uréthane contient au moins un polyol souple de type polyoléfine, un polyol polyester, un polyol polyacrylique et une résine uréthane produite en faisant réagir un polyol avec un isocyanate non jaunissant, et contient en outre au moins un isocyanate non jaunissant et un dérivé de l'isocyanate non jaunissant.
